# FASCICULE DE BREVET EUROPEEN

(11) **EP 1 702 517 B1**
(45) Date de publication et mention de la délivrance du brevet: **05.06.2013**
(21) Numéro de dépôt: 06352007.6
(22) Date de dépôt: 13.03.2006
(51) Int. Cl.: A23K 1/00, A23K 1/18

(54) **Procédé de préparation de grains de kéfir, et application aux installations de préparation de soupes pour animaux d'élevage**
Verfahren zur Herstellung von Kefirknollen und Anwendung bei Einrichtungen zur Zubereitung von Flüssignahrung für Zuchttiere
Method for preparing kefir grains and application to apparatus for the preparation of soups for stock animals

(30) Priorité: 16.03.2005 FR 0502595
(43) Date de publication de la demande: 20.09.2006
(73) Titulaire: Sarl Caribou.T.G., 82440 Realville (FR)
(72) Inventeur: Deshayes, Christian, 31270 Cugnaux (FR); Renard, Thierry, 31200 Toulouse (FR); Rollan, Serge, 09100 Pamiers (FR); Genibre, Robert, 82440 Realville (FR); Raust, Yves, 46090 Le Montat (FR)
(74) Mandataire: Cabinet BARRE LAFORGUE & associés

(56) Documents cités:
- DE-U1- 29 715 520
- US-A- 5 322 686
- US-B1- 6 199 512
- PATENT ABSTRACTS OF JAPAN vol. 2003, no. 12, 5 décembre 2003 (2003-12-05) & JP 2003 310154 A (NIPPON KEFIA KK), 5 novembre 2003 (2003-11-05)
- PATENT ABSTRACTS OF JAPAN vol. 012, no. 059 (C-478), 23 février 1988 (1988-02-23) & JP 62 205735 A (KIBUN KK; others: 01), 10 septembre 1987 (1987-09-10)
- DATABASE WPI Section Ch, Week 199850 Derwent Publications Ltd., London, GB; Class D13, AN 1998-592554 XP002340606 & RU 2 108 723 C1 (BAIBAKOV V I) 20 avril 1998 (1998-04-20)
- DATABASE WPI Section Ch, Week 200029 Derwent Publications Ltd., London, GB; Class B04, AN 2000-337590 XP002340607 & RU 2 132 136 C1 (ANISIMOVA T I) 27 juin 1999 (1999-06-27)
- PATENT ABSTRACTS OF JAPAN vol. 2003, no. 12, 5 décembre 2003 (2003-12-05) & JP 2004 149442 A (YONEZAWA BIRU SYSTEM SERVICE:KK), 27 mai 2004 (2004-05-27)
- GONCU A ET AL: "Sensory and chemical properties of white pickled cheese produced using kefir, yoghurt or a commercial cheese culture as a starter" INTERNATIONAL DAIRY JOURNAL, ELSEVIER APPLIED SCIENCE, BARKING,, GB, vol. 15, no. 6-9, juin 2005 (2005-06), pages 771-776, XP004978601 ISSN: 0958-6946

## Description

L'invention concerne le traitement des installations et des équipements utilisés pour préparer et/ou pour distribuer des compositions alimentaires liquides destinées aux animaux d'élevage, notamment à des fins de maîtrise de l'hygiène et de la salubrité des ces installations et/ou à des fins d'amélioration des propriétés nutritionnelles des compositions alimentaires distribuées à ces animaux.

On connaît déjà :
- de JP 2003 310154 un procédé de préparation de lait de soja fermenté dans lequel du lait de soja est mélangé avec un starter formé de lait de soja préalablement incubé avec des grains de kéfir ;
- de JP 62205735 un procédé de préparation d'un aliment caillé à partir de lait de vache de lait de soja et de grains de kéfir ;
- de RU 2 108 723 un procédé d'acidification du lait par une composition comprenant des champignons issus du kéfir et des lactobactéries ;
- de RU 2 132 136 un procédé de fermentation d'un mélange de lait de vache et de lait de soja par un mélange acidifiant contenant du *Lactobacillus acidophilus*, du *Streptococcus thermophilus* et des grains de kéfir ;
- de JP 2004 149442 un procédé de fabrication d'une préparation cosmétique présentant un effet antioxydant à l'encontre de l'oxygène actif et un effet inhibiteur de la production de mélanine dans lequel on place des grains de kéfir dans un milieu de culture contenant du thé vert.

On connaît aussi de US 6 199 512 un dispositif de distribution d'un supplément alimentaire à un animal domestique.

Dans tout le texte, on entend par :
- développement des grains de kéfir : le développement métabolique des levures et des bactéries formant les grains de kéfir, mais également la synthèse et le remodelage de la matrice polysaccharidique des grains de kéfir ;
- milieu minimum (sous-entendu, spécifique à la culture des grains de kéfir) : une composition nutritive comprenant au moins tous les éléments nutritifs de base, indispensables et suffisants, pour le maintien en vie des bactéries et des levures des grains de kéfir, et pour autoriser le développement des grains de kéfir ; les éléments nutritifs de base d'un tel milieu de culture sont décrits dans la littérature (au moins un sucre métabolisable par la microflore des grains de kéfir, des sels minéraux, des acides aminés essentiels...) et de nombreux produits laitiers (comme par exemple le lait entier, le lait demi-écrémé, le babeurre ou encore les lactosérums) sont connus pour contenir de tels éléments nutritifs, en quantités et en proportions appropriées, et par conséquent peuvent être utilisés pour permettre le développement de grains de kéfir ; de telles compositions nutritives (que ce soit des milieux minimums ou des compositions plus complexes), au sens de la présente invention, sont dits milieux nutritifs aptes à permettre le développement des grains de kéfir.

Egalement, dans tout le texte, à des fins de simplification de la compréhension de l'invention, les poids et les proportions pondérales des constituants de toutes compositions sont exprimés en faisant référence à la matière sèche.

Dans le domaine de l'élevage agricole, notamment l'élevage porcin, la nourriture distribuée aux bêtes se présente souvent sous une forme liquide que les animaux peuvent ingurgiter beaucoup plus facilement et plus rapidement que s'il s'agissait de nourritures solides ou de farines sèches. Usuellement appelé "soupe", ce type de nourriture se compose essentiellement d'eau et de plusieurs denrées alimentaires bon marché, ou de co-produits et de sous-produits de l'industrie agroalimentaire.

Le milieu liquide que constituent ces soupes est naturellement propice au développement rapide d'une flore microbienne d'autant plus que la température de ce milieu fluctue idéalement entre 20°C et 40°C. Egalement, les sources de contamination sont nombreuses et peuvent provenir aussi bien de l'environnement extérieur que de l'intérieur même de l'installation (qualité de l'eau, qualité des matières premières, qualité de l'environnement ambiant...).

Compte tenu de la taille des installations, de l'accessibilité limitée de certaines de leurs parties, le temps nécessaire à une désinfection minutieuse de ces installations n'est pas compatible avec les multiples prises alimentaires quotidiennes des animaux. Aussi, les désinfections ne sont réalisées, au mieux, qu'une à deux fois par mois. Du fait de cette périodicité, l'état de propreté de telles installations, entretenues simplement par des désinfections périodiques, n'est que très éphémère, au regard de la prolifération rapide de la microflore dans ce type de milieu.

Pour pallier à l'impossibilité d'entreprendre une désinfection des installations avec une minutie et une fréquence appropriées pour abaisser de façon drastique la concentration de la microflore, et pour maintenir l'hygiène des installations à un niveau acceptable entre deux désinfections, il a été proposé d'ensemencer les soupes de probiotiques, des souches bien particulières de bactéries ou de levures.

L'inhibition de la microflore indésirable par les probiotiques peut s'effectuer par différentes voies d'action ; la production d'acides organiques (notamment acide lactique et/ou acide acétique) qui abaisse le pH et freine la prolifération de micro-organismes tels que les coliformes et les salmonelles, la production de peroxyde d'hydrogène qui peut bloquer spécifiquement le développement de certains pathogènes d'origine bactérienne, fongique ou virale. Egalement, l'adjonction des probiotiques dans les soupes permet d'améliorer la flore intestinale des animaux qui les ingurgitent et renforce ainsi la protection intestinale à l'égard de la flore pathogène.

Mais une telle utilisation des probiotiques implique des coûts et des contraintes d'exploitation et de maintenance supplémentaires, ainsi qu'une maîtrise technique qui, bien souvent, est hors de portée pour un exploitant ordinaire.

En effet, chaque probiotique ayant un spectre d'action bien particulier, la combinaison de plusieurs probiotiques est généralement indispensable pour espérer une action efficace. Toutefois, il est fréquent de constater une certaine compétitivité entre probiotiques de sorte que certaines combinaisons sont à éviter. Le choix des probiotiques à utiliser nécessite, de la part de l'exploitant, d'identifier les différents agents pathogènes qui infectent les installations, et requiert un niveau de connaissance important sur les propriétés et le métabolisme de chacun des probiotiques.

Enfin, pour qu'un probiotique présente une activité optimale, l'exploitant doit le maintenir dans les conditions appropriées notamment de température, de pH et de taux d'oxygène du milieu. Or, cette tâche est d'autant plus délicate et fastidieuse que les installations de préparation et de distribution des soupes sont des systèmes ouverts, considérablement influencés par l'environnement extérieur.

L'invention vise à proposer de nouveaux agents antimicrobiens évitant les inconvénients précités pour les probiotiques. Egalement, l'invention vise à proposer un procédé de traitement des installations de préparation et de distribution des soupes en vue d'une amélioration de l'hygiène et du niveau de salubrité.

Un objectif principal de l'invention est donc de proposer de nouveaux agents antimicrobiens particulièrement adaptés à de telles installations et dont l'utilisation à cette fin, ne génère aucune contrainte particulière pour l'exploitant et ne requiert de sa part qu'un minimum de connaissance technique. En outre, l'invention vise à proposer de tels agents antimicrobiens dont l'utilisation doit d'être compatible avec les connaissances, les contraintes budgétaires et de temps d'un exploitant ordinaire, et qui ne génère pour les animaux aucune gêne d'ordre gustatif.

Un autre objectif principal de l'invention est de proposer un procédé permettant de préparer de tels agents antimicrobiens de façon simple et à moindre prix.

L'invention concerne donc en premier lieu un procédé permettant la préparation de nouveaux agents antibactériens aptes à agir sur les installations de préparation et/ou de distribution de soupes destinées à l'alimentation d'animaux d'élevage.

En particulier, l'invention porte sur un procédé de préparation de grains de kéfir selon la revendication 1.

Ce faisant, un procédé selon l'invention permet d'orienter l'activité métabolique de la microflore des grains de kéfir vers l'utilisation de sources d'énergie nouvelles que renferment le(s) substrat(s) du milieu adaptateur et l'(les) aliment(s) non lacté(s) du milieu cible (correspondant au milieu adaptateur), au lieu du lactose auquel elle a ordinairement accès dans les compositions lactées. A l'issue de ce procédé de préparation, les grains de kéfir ainsi adaptés pourront être maintenus de façon viable pendant une période relativement longue, de l'ordre de plusieurs mois, à l'intérieur du milieu cible (correspondant au milieu adaptateur) où ils pourront manifester leurs activités antimicrobiennes et/ou nutritionnelles.

Un milieu cible au sens de l'invention désigne en particulier toute composition liquide nutritive pouvant être rencontrée dans une installation de préparation et de distribution de soupes. Notamment, il s'agit de compositions aqueuses dans lesquelles se trouvent, en suspension, un ou plusieurs aliments, ou produits nutritionnels, à la base de l'alimentation des animaux d'élevage. Ces produits nutritionnels, désignés par le terme "aliments" consistent généralement en des denrées alimentaires à bas prix et/ou des co-produits et/ou des sous-produits de l'industrie agroalimentaire et sont de natures les plus diverses : les grains et/ou les rafles (éventuellement, les tourteaux) de plantes céréalières, de plantes oléagineuses (soja, maïs, blé, tournesol, colza, orge...) ou de plantes protéagineuses (lupin, petit pois...) ; tout ou partie d'au moins un légume (betterave, pomme de terre, carotte, chou...), un fruit (pomme, pêche, abricot, ananas, prune, kiwi, melon...) ; un retrait de crèmes glacées, de boulangerie, de pâtisserie...

La partie aqueuse d'un milieu cible au sens de l'invention peut être constituée d'eau et/ou d'un effluent de brasserie (des co-produits de levures...) ou de vinification.

Dans ce contexte, un milieu cible au sens de l'invention, peut désigner aussi bien la soupe qui *in fine* est distribuée aux animaux, qu'une simple préparation liquide intermédiaire ou encore qu'une composition liquide trouvée dans les cuves de retour de soupe, classiquement utilisées dans ce type d'installation pour refouler les restes de soupes et vider ainsi la machine à soupe. Quelle que soit sa composition chimique exacte, une telle composition liquide nutritive forme un milieu particulièrement propice à la prolifération de la microflore pathogène.

Selon l'invention, on dit de deux aliments qu'ils présentent une digestibilité enzymatique similaire lorsque leurs constituants majeurs (glucidiques et/ou lipidiques et/ou protéiques) sont de même nature. Dès lors, pour un système enzymatique déterminé leur dégradation s'effectue selon un même mécanisme de lyse. Au contact des grains de kéfir, leur présence permet de stimuler les mêmes activités enzymatiques.

Par exemple, deux plantes de même espèce mais de variétés différentes sont ainsi considérées comme des aliments de digestibilités enzymatiques similaires, puisqu'elles sont aptes à stimuler un même système enzymatique pour leur digestion. Les digestibilités enzymatiques de deux variétés d'une même espèce végétale, sont généralement très similaires, voire parfaitement identiques.

Lorsque le(s)dit(s) aliment(s) non lacté(s) constitutif(s) du milieu cible consiste(nt) en une(des) plante(s) ou une(des) partie(s) de plante(s) (d'une céréale, d'un fruit, d'un légume...) de variété(s) particulière(s), il n'est pas nécessaire de choisir pour la préparation d'un milieu adaptateur selon l'invention, un(des) substrat(s) de même variété que celle(s) de l'(des) aliment(s) non lacté(s) ; un(des) substrat(s) de variété(s) voisine(s) fait (font) l'affaire. Toutefois, des résultats meilleurs peuvent être espérés en utilisant un(des) substrat(s) de même(s) variété(s) que l'(des) aliment(s) d'origine végétale, du milieu cible.

De même, la plupart des produits de boulangerie et de pâtisserie, qui sont essentiellement constitués d'amidon, et éventuellement d'un quantité non négligeable de saccharose, sont considérés au sens de l'invention comme des aliments de digestibilités enzymatiques similaires.

Lorsque ledit aliment non lacté constitutif du milieu cible consiste en un produit ou un co-produit, de composition plus complexe, provenant par exemple de l'industrie agroalimentaire, on pourra utiliser, à titre de substrat, le même produit ou co-produit selon l'invention, ou un produit similaire ayant les mêmes constituants, glucidiques et/ou lipidiques et/ou protéiques, majeurs.

L'invention propose ainsi un procédé permettant de conférer à des grains de kéfir des propriétés particulières qui leur permettent, lorsqu'ils sont placés à l'intérieur d'une telle composition liquide nutritive, de réduire la concentration de la flore microbienne potentiellement pathogène et d'en contrôler la prolifération.

Des grains de kéfir directement placés à l'intérieur d'une telle composition liquide nutritive, sans avoir été soumis au préalable à un traitement selon l'invention, se désagrègent (ou se liquéfient) très rapidement.

Par contre, des grains de kéfir traités selon l'invention, c'est-à-dire avec un milieu adaptateur adéquat dont la composition dépend en grande partie de la nature du(des) aliment(s) de la composition liquide (milieu cible) dans laquelle ils seront ultérieurement placés, ont donné lieu notamment aux constatations suivantes :
1) ces grains de kéfir peuvent être maintenus dans le milieu cible, sans altération structurelle et fonctionnelle, pendant une période d'au moins deux mois,
2) ces grains de kéfir, dans le milieu cible, sécrètent des quantités importantes d'acides (en particulier acide lactique et acide acétique, connus pour leurs larges spectres bactériostatiques) et permettent de maintenir le milieu à des niveaux de pH pour lesquels on trouve une concentration importante d'acides sous forme non dissociée, c'est-à-dire sous la forme bactériostatique la plus active,
3) un procédé de traitement de grains de kéfir selon l'invention, ne permet pas uniquement aux grains de kéfir de se maintenir à l'intérieur des soupes ou d'autres compositions liquides rencontrées dans une installation de préparation et de distribution de soupes, il permet également une induction de l'expression de nombreuses enzymes qui interviennent dans la digestion des aliments distribués aux animaux et en améliore la qualité nutritionnelle,
4) ces grains de kéfir sont avantageusement utilisés pour préparer de nouvelles compositions d'additifs zootechniques qui, ajoutées aux compositions liquides rencontrées dans les installations de préparation et/ou de distribution de soupes, se sont révélées sans effet indésirable pour les animaux et d'une efficacité certaine contre le développement de la microflore pathogène.

Egalement, les résultats de tests réalisés sur le terrain (dans différentes exploitations agricoles) ont permis de montrer que des grains de kéfir préparés selon un procédé conforme à l'invention, une fois placés dans différentes compositions liquides des installations de préparation et de distribution de soupes -en particulier les compositions liquides nutritives des machines à soupes, des cuves tampon et des cuves de retour de soupe-, pouvaient induire les effets suivants :
1) une modification de l'équilibre microbien dans ces installations, grâce à une pression de sélection qui se réalise aux dépens de la microflore potentiellement pathogène, et qui se traduit par une baisse substantielle de la morbidité chez les animaux, avec disparition des cas de cannibalisme et, par conséquent, une sécurisation de la ration soupe,
2) une amélioration remarquable de la valeur nutritionnelle des soupes, qui se traduit par une meilleure prise alimentaire et des résultats zootechniques très satisfaisants.

Avantageusement et selon l'invention, le(s) substrat(s) du milieu adaptateur présente(nt) une(des) composition(s) chimique(s) identique(s), en terme de matière sèche, à l'(à des) aliment(s) non lacté(s) du milieu cible. En d'autres termes, pour préparer ledit milieu adaptateur, on utilise de préférence comme substrat(s), l'aliment non lacté ou éventuellement plusieurs des aliments non lactés qui servent d'aliment de base à la soupe préparée dans l'installation considérée.

Selon un mode de réalisation particulier de l'invention, avantageusement, on prépare le milieu adaptateur avec un substrat unique de composition chimique identique à un aliment non lacté présent en une quantité prépondérante dans le milieu cible.

Selon un autre mode de réalisation particulier de l'invention, avantageusement, on prépare le milieu adaptateur avec plusieurs substrats de compositions chimiques identiques à plusieurs des aliments non lactés du milieu cible. Selon ce même mode de réalisation, avantageusement, dans le milieu adaptateur préparé, lesdits substrats présentent des proportions pondérales relatives de même ordre de grandeur que celles desdits aliments non lactés du milieu cible.

Avantageusement et selon l'invention, que le milieu adaptateur renferme un ou plusieurs substrats, la proportion pondérale milieu nutritif/substrat(s) est de l'ordre de 1:1, en terme de matière sèche.

De manière générale, les soupes destinées aux animaux sont préparées à partir de grains et/ou de rafles (éventuellement, de tourteaux) de plantes céréalières et/ou de plantes oléagineuses (soja, maïs, blé, tournesol, colza, orge...) et/ou de plantes protéagineuses (lupin, petit pois...), de tout ou partie d'un légume (betterave, pomme de terre, carotte, chou...), et/ou d'un fruit (pomme, pêche, abricot, ananas, prune, kiwi, melon...), d'un retrait de crèmes glacées, de boulangerie, de pâtisserie... Aussi, avantageusement et selon l'invention, le(les) substrat(s) d'un milieu adaptateur conforme à l'invention, est(sont) choisi(s) parmi : tout ou partie d'une plante céréalière, d'une plante oléagineuse, d'une plante protéagineuse, d'un légume, d'un fruit, une crème glacée, un produit de boulangerie ou de pâtisserie... En particulier, il(s) est(sont) choisi(s) parmi : tout ou partie du soja, du maïs, du blé, du colza, de l'orge, du lupin, du petit pois, de la betterave, de la pomme de terre, de la carotte, du chou, de la pomme, de la pêche, de l'abricot, de l'ananas, de la prune, du kiwi, du melon.

Avantageusement et selon l'invention, le milieu adaptateur est préparé simplement en mélangeant les aliments non lactés qui constituent la soupe distribuée aux animaux, avec un milieu nutritif apte à permettre le développement des grains de kéfir. Selon ce mode de réalisation particulier, on prépare le milieu adaptateur en mélangeant, audit milieu nutritif -notamment un milieu minimum- une quantité appropriée d'une composition sèche correspondant à la composition du milieu cible.

Selon l'invention, chaque substrat du milieu adaptateur est en suspension dans le milieu nutritif. Il peut ainsi s'agir d'un aliment présent sous la forme d'un fluide distribué de façon plus ou moins homogène dans l'ensemble de la phase liquide du milieu nutritif. Il peut aussi s'agir d'un aliment initialement solide se trouvant *in fine* à l'état dissous dans cette phase liquide, ou bien encore un aliment solide présent sous forme divisée, en particules plus ou moins fines (éventuellement, farine, semoule...) en suspension dans cette phase liquide (et éventuellement imbibé de cette phase liquide).

Avantageusement et selon l'invention, on prépare le milieu adaptateur avec un milieu minimum de composition aqueuse comprenant au moins les éléments suivants dans les concentrations indiquées :
- glucose de l'ordre de 2 g.ℓ⁻¹
- L-cystéine de l'ordre de 2 g.ℓ⁻¹
- L-glycine de l'ordre de 25 mg.ℓ⁻¹
- L-tryptophane de l'ordre de 10 mg.ℓ⁻¹
- sulfate de magnésium de l'ordre de 15 mg.ℓ⁻¹
- sulfate de manganèse de l'ordre de 0,3 g.ℓ⁻¹
- sulfate de fer de l'ordre de 0,1 g.ℓ⁻¹
- acétate de sodium de l'ordre de 0,05 g.ℓ⁻¹
- phosphate bipotassique de l'ordre de 5 g.ℓ⁻¹
- riboflavine de l'ordre de 0,5 g.ℓ⁻¹
- thiamine (notamment dichlorure) de l'ordre de 1 g.ℓ⁻¹.

Il convient de noter que, dans la composition ci-dessus, ne sont énumérés que les éléments strictement essentiels et nécessaires entrant dans la composition d'un milieu minimum apte à permettre le développement des grains de kéfir. Dans la composition de ce milieu minimum particulier, le glucose peut être remplacé par tout sucre métabolisable par la microflore des grains de kéfir (notamment, lactose et saccharose).

La notion de milieu nutritif adapté au développement des grains de kéfir, au sens de l'invention, correspond ainsi à tout milieu de culture de composition chimique identique ou analogue au milieu minimum précédemment cité. Cette notion de milieu nutritif vise également tout milieu de culture de composition chimique plus complexe qui comprend les constituants des milieux minimums précédemment évoqués ; il s'agit en particulier de nombreux produits laitiers comme par exemple le lait, le babeurre, le lactosérum...

Selon un mode de réalisation de l'invention, particulièrement préféré, on prépare le milieu adaptateur à partir d'un milieu nutritif consistant simplement en un lait demi-écrémé, en particulier un lait demi-écrémé UHT. On peut également et avantageusement utiliser un lactosérum doux -éventuellement une poudre de lactosérum doux mélangée à de l'eau-.

Avantageusement et selon l'invention, le milieu activateur présente une proportion poids/volume de matière sèche de l'ordre de 10 %.

Avantageusement et selon l'invention, le milieu nutritif est stérilisé avant l'addition du(des) substrat(s). De même, préalablement à l'étape d'incubation des grains de kéfir, le milieu adaptateur est pasteurisé, notamment à 80°C pendant 5 minutes.

Avantageusement et selon l'invention, on réalise l'étape d'adaptation à une température comprise entre 15°C et 40°C, notamment à 25°C.

Avantageusement et selon l'invention, la durée de l'étape d'adaptation est de l'ordre de 3 jours.

Pour mettre en oeuvre un procédé de traitement de grains de kéfir selon l'invention, de façon particulièrement simple, avantageusement, on manipule les grains de kéfir au travers d'au moins un réceptacle apte à retenir les grains de kéfir en son sein et à permettre un échange de matières entre lesdits grains de kéfir et un milieu extérieur audit réceptacle. Selon ce mode de mise en oeuvre particulier de l'invention, on réalise l'adaptation des grains de kéfir en immergeant le(s)dit(s) réceptacle(s) retenant des grains de kéfir, dans ledit milieu adaptateur. Une fois l'adaptation des grains de kéfir réalisée, en retirant le(s) réceptacle(s) du milieu adaptateur, on récupère l'ensemble des grains de kéfir traités, de façon simple et rapide.

En particulier, il s'agit de grains de kéfir imbibés d'une composition liquide, dit milieu adaptateur, comprenant :
1) un milieu nutritif adapté au développement des grains de kéfir,
2) une quantité d'au moins un aliment, dit substrat, en suspension et choisi parmi : tout ou partie d'une plante céréalière, d'une plante oléagineuse, d'une plante protéagineuse, d'un légume, d'un fruit, une crème glacée, un produit de boulangerie ou de pâtisserie.

Selon l'invention, ledit milieu adaptateur présente une proportion pondérale milieu nutritif/substrat(s), en terme de matière sèche, de l'ordre de 1:3 à 3:1.

Avantageusement et selon l'invention, le milieu adaptateur comprend un(des) substrat(s) choisi(s) parmi : tout ou partie d'une plante céréalière, d'une plante oléagineuse, d'une plante protéagineuse, d'un légume, d'un fruit, une crème glacée, un produit de boulangerie ou de pâtisserie... et en particulier, tout ou partie du soja, du maïs, du blé, du colza, de l'orge, du lupin, du petit pois, de la betterave, de la pomme de terre, de la carotte, du chou, de la pomme, de la pêche, de l'abricot, de l'ananas, de la prune, du kiwi, du melon.

Avantageusement, les grains de kéfir sont imbibés d'un milieu adaptateur présentant une proportion pondérale milieu nutritif/substrat(s) de l'ordre de 1:1, en terme de matière sèche.

Avantageusement et selon l'invention, le milieu nutritif du milieu adaptateur est un milieu minimum, notamment de composition comprenant au moins les éléments suivants dans les concentrations indiquées :
- glucose de l'ordre de 2 g.ℓ⁻¹
- L-cystéine de l'ordre de 2 g.ℓ⁻¹
- L-glycine de l'ordre de 25 mg.ℓ⁻¹
- L-tryptophane de l'ordre de 10 mg.ℓ⁻¹
- sulfate de magnésium de l'ordre de 15 mg.ℓ⁻¹
- sulfate de manganèse de l'ordre de 0,3 g.ℓ⁻¹
- sulfate de fer de l'ordre de 0,1 g.ℓ⁻¹
- acétate de sodium de l'ordre de 0,05 g.ℓ⁻¹
- phosphate bipotassique de l'ordre de 5 g.ℓ⁻¹
- riboflavine de l'ordre de 0,5 g.ℓ⁻¹
- thiamine (notamment dichlorure) de l'ordre de 1 g.ℓ⁻¹.

Selon un mode particulier de réalisation de l'invention, le milieu adaptateur selon l'invention, comprend un milieu nutritif choisi parmi : un lait demi-écrémé (en particulier, un lait demi-écrémé UHT), un lactosérum doux.

Avantageusement, les grains de kéfir sont conditionnés à l'intérieur d'un réceptacle apte à les retenir en son sein et à permettre un échange de matières entre lesdits grains de kéfir et un milieu extérieur audit réceptacle. Avantageusement et selon l'invention, ledit réceptacle présente une enceinte délimitée par une paroi rigide présentant une pluralité d'alésages traversants.

Selon un autre mode de réalisation, ledit réceptacle présente une enceinte délimitée par une paroi rigide de structure en treillis.

L'invention s'étend également à l'utilisation de grains de kéfir, tels que précédemment préparés, en vue de la mise en oeuvre d'un procédé de traitement d'une installation de préparation et/ou de distribution de soupes destinées à l'alimentation d'animaux d'élevage ; ledit procédé de traitement pouvant avoir pour objectif :
- une amélioration de l'hygiène et de la salubrité de ladite installation ou de certains de ses équipements, et/ou
- une prévention et/ou une éradication d'une contamination par des micro-organismes indésirables, des soupes et d'autres compositions liquides rencontrées dans les exploitations d'élevage, et/ou
- une amélioration de la qualité nutritionnelle des soupes.

A cet effet, dans un procédé de traitement d'une installation de préparation et/ou de distribution de soupes destinées à l'alimentation d'animaux d'élevage, on maintient, au contact d'une composition liquide comprenant au moins un aliment non lacté, présente à l'intérieur de ladite installation, des grains de kéfir préalablement adaptés par incubation dans un milieu adaptateur de composition chimique particulière, élaborée au vu de la composition chimique des aliments non lactés de ladite composition liquide.

Avantageusement et selon l'invention, on maintient au contact de ladite composition liquide une quantité de grains de kéfir correspondant à au moins de l'ordre de 10⁶ ufc (unités formant colonie) par gramme de matière sèche de ladite composition liquide.

En procédant comme indiqué, les inventeurs ont observé sur une période de 90 jours, sans autre modification des compostions liquides trouvées dans les installations de préparation et de distribution de soupes, une neutralisation progressive et significative de la microflore initialement présente dans ces installations, et en particulier une neutralisation progressive des coliformes et des moisissures pour atteindre un nouvel équilibre microbien stable avec émergence d'une flore des grains de kéfir dominante dans ces installations.

Egalement, après environ 250 jours de traitement des installations, les premières constatations d'une amélioration sur les animaux ont pu être faites : un développement plus rapide, une baisse de la morbidité.

Avantageusement et selon l'invention, pour manipuler plus aisément les grains de kéfir, on utilise au moins un réceptacle apte à retenir lesdits grains de kéfir en son(leur) sein et à permettre un échange de matières entre lesdits grains de kéfir et un milieu extérieur audit réceptacle. Selon ce mode de réalisation de l'invention, la mise des grains de kéfir en contact de ladite composition liquide est réalisée en immergeant ce(s) réceptacle(s) dans ladite composition liquide qui est maintenue sous une agitation apte à induire un flux entretenu de matières au travers du(des) réceptacle(s) immergé(s).

Selon ce mode particulier de mise en oeuvre de l'invention, avantageusement, le(s) réceptacle(s) contenant les grains de kéfir au terme d'une période de l'ordre de deux mois, pour le(s) remplacer par un(des) réceptacle(s) contenant des grains de kéfir fraîchement adaptés.

Avantageusement et selon l'invention, le(s)dit(s) réceptacle(s) est(sont) alors récupéré(s) en vue de soumettre les grains de kéfir à une nouvelle étape d'adaptation. Une fois la réadaptation effectuée, ces grains de kéfir peuvent alors être réutilisés pour de nouveau mettre en oeuvre un procédé de traitement d'une installation de préparation et/ou de distribution de soupes destinées aux animaux d'élevage.

Avantageusement et selon l'invention, on place au moins un réceptacle contenant les grains de kéfir dans la composition liquide d'au moins une partie de ladite installation de préparation et de distribution de soupes destinées à l'alimentation d'animaux d'élevage choisie parmi : une machine à soupe, une cuve tampon, une cuve de retour de soupe.

Outre l'avantage de permettre un ensemencement d'une microflore salutaire pour les animaux et l'hygiène des installations de préparation et de distribution des soupes, les grains de kéfir préparés selon l'invention trouvent également une utilité inéluctable dans la préparation de nouveaux additifs zootechniques aux pouvoirs antibactériens et antifongiques puissants. En l'occurrence, les grains de kéfir préparés selon l'invention permettent de fermenter avantageusement des infusions de plante(s) aromatique(s) qui pourront aller complémenter les soupes destinées à l'alimentation animale.

Avantageusement et selon l'invention, les infusions fermentées par les grains de kéfir sont préparées à partir d'au moins une plante aromatique renfermant des actifs choisis notamment parmi : le thymol, le carvacrol, le géraniol, le linalol, le thujanol... (actifs déjà décrits dans la littérature pour leurs effets antimicrobiens).

Avantageusement et selon l'invention, cette plante aromatique est choisie parmi : le thym, l'origan, le clou de girofle, la cannelle, la sarriette... Notamment, des additifs obtenus par fermentation des infusions de thym et d'origan, au moyen de grains de kéfir préalablement activés conformément à l'invention, ont conduit à des résultats zootechniques des plus satisfaisants.

L'invention concerne également un procédé pour préparer des grains de kéfir pour les adapter à un milieu liquide comprenant au moins un aliment non lacté, l'application de ces grains de kéfir en vue du traitement d'une installation de préparation et/ou de distribution de soupes destinées à l'alimentation d'animaux d'élevage, caractérisés, en combinaison, par tout ou partie des caractéristiques ci-dessus ou ci-après.

D'autres buts, caractéristiques et avantages de l'invention apparaîtront à la lecture de la description des différents modes de réalisation de l'invention ci-après présentés, qui se réfèrent aux figures annexées, dans lesquelles :
- la figure 1 est un exemple de courbe Eᵢ=*f*(MN/S), représentative de la variation d'une activité enzymatique particulière en fonction de la proportion pondérale milieu nutritif/substrat(s) d'un milieu activateur selon l'invention,
- les figures 2 à 7 sont des représentations graphiques en histogrammes qui illustrent les activations enzymatiques particulières déclenchées chez des grains de kéfir après un traitement d'adaptation selon l'invention,
- la figure 8 est une vue schématique en perspective éclatée de grains de kéfir conditionnés à l'intérieur d'un réceptacle particulier, conforme à un mode particulier de mise en oeuvre de l'invention.

EXEMPLE 1 :Choix de la proportion pondérale MN/S (milieu nutritif/substrat) d'un milieu activateur, pour un milieu cible particulier.

Le présent exemple est donné à titre indicatif d'une méthode permettant de définir, en fonction d'un milieu cible de composition particulière, un milieu de culture pouvant faire office de milieu adaptateur selon l'invention. En particulier, il s'agit d'une méthode permettant de déterminer la proportion pondérale milieu nutritif/substrat(s) appropriée.

### 1/- Constituants d'un milieu adaptateur et étape d'adaptation.

Chaque milieu adaptateur est préparé en mélangeant un milieu nutritif, au sens de l'invention, avec un substrat de même composition chimique que l'aliment du milieu cible considéré. Il peut s'agir du même aliment de base que celui-ci destiné à être distribué aux animaux, sous forme de soupe. Il peut également s'agir d'un aliment de variété différente, lorsque l'aliment est une plante (un légume, un fruit, une céréale).

A titre de milieu nutritif, on peut utiliser, par exemple, un lait demi-écrémé UHT ou un lactosérum doux.

A titre de milieu nutritif selon l'invention, on peut également utiliser un milieu minimum de composition aqueuse suivante :
- glucose 2 g.ℓ⁻¹
- L-cystéine 2 g.ℓ⁻¹
- L-glycine 25 mg.ℓ⁻¹
- L-tryptophane 10 mg.ℓ⁻¹
- sulfate de magnésium 15 mg.ℓ⁻¹
- sulfate de manganèse 0,3 g.ℓ⁻¹
- sulfate de fer 0,1 g.ℓ⁻¹
- acétate de sodium 0,05 g.ℓ⁻¹
- phosphate bipotassique 5 g.ℓ⁻¹
- riboflavine 0,5 g.ℓ⁻¹
- dichlorure de thiamine 1 g.ℓ⁻¹.

Chaque milieu adaptateur comprend 10 % de matière sèche et une proportion pondérale déterminée MN/S.

Avant l'incubation avec les grains de kéfir, chaque milieu adaptateur est pasteurisé à 80°C, pendant 5 minutes. Chaque milieu est ensuite ensemencé avec une quantité de grains de kéfir correspondant à un inoculum de l'ordre de 10⁶ ufc par gramme de matière sèche. L'adaptation est réalisée dans une étuve à 24°C, pendant 3 jours.

### 2/- Méthode et protocole de détermination de la proportion MN/S appropriés à chaque milieu adaptateur.

La méthode consiste à réaliser, pour chaque milieu cible, une gamme de milieux adaptateurs avec différentes proportions pondérales MN/S déterminées.

Dans chacun des mélanges réalisés, on incube des grains de kéfir en vue d'une adaptation, à l'issue de laquelle différentes activités enzymatiques sont mesurées. 19 activités enzymatiques ont ainsi été testées.

Pour ce faire, le système api®ZYM de la société BIOMERIEU, France, a été utilisé. Les tests réalisés ont concerné les enzymes suivantes (notées E2 à E20), identifiées pour leur importance dans le processus général de métabolisation d'aliments ordinaires : la phosphatase alcaline (E2), l'estérase C 4 (E3), l'estérase lipase C 8 (E4), la lipase C 14 (E5), la leucine arylamidase (E6), la cystine arylamidase (E7), la trypsine (E8), l'α-chymotrypsine (E9), la phosphatase acide (E10), la naphtol-AS-BI-phosphohydrolase (E11), l'α-galactosidase (E12), la β-galactosidase (E 13), la β-glucuronidase (E 14), l'α-glucosidase (E15), la β-glucosidase (E16), la N-acétyl-β-glucosaminidase (E18), l'α-mannosidase (E19), l'α-fucosidase (E20).

La mesure de ces activités a été réalisée en suivant le protocole api^{®}ZYM.

Après 3 jours d'adaptation, 1 ml de chaque culture est prélevé puis dilué dans 4 ml d'eau distillée. Les plaques multi-cupules sont préparées selon les recommandations du fournisseur. Après avoir réparti 5 ml d'eau distillée dans le fond de chacun des cupules, on répartit dans ces cupules les échantillons précédemment préparés. Les plaques sont alors mises à incuber dans une étuve à 24°C, pendant une nuit.

Les réactifs ZYM A et ZYM B sont ensuite introduits dans chaque cupule et les plaques sont exposées sous une lumière intense (par exemple, celle d'une lampe de 1000 watts) avant lecture.

La lecture est réalisée par notation de l'intensité de la coloration observée dans chaque cupule. La notation varie de 0 à 5, par palier de 0,5.

Pour chaque enzyme, on trace la courbe d'activité E*ᵢ*=*ƒ*(MN/S) correspondante, qui montre l'évolution du niveau d'activité (E*ᵢ*) de cette enzyme en fonction de la proportion pondérale (MN/S) du milieu activateur. Par le biais de la mesure d'activité de cette enzyme, on détermine la proportion pondérale (MN/S) pour laquelle l'activité de cette enzyme est optimale.

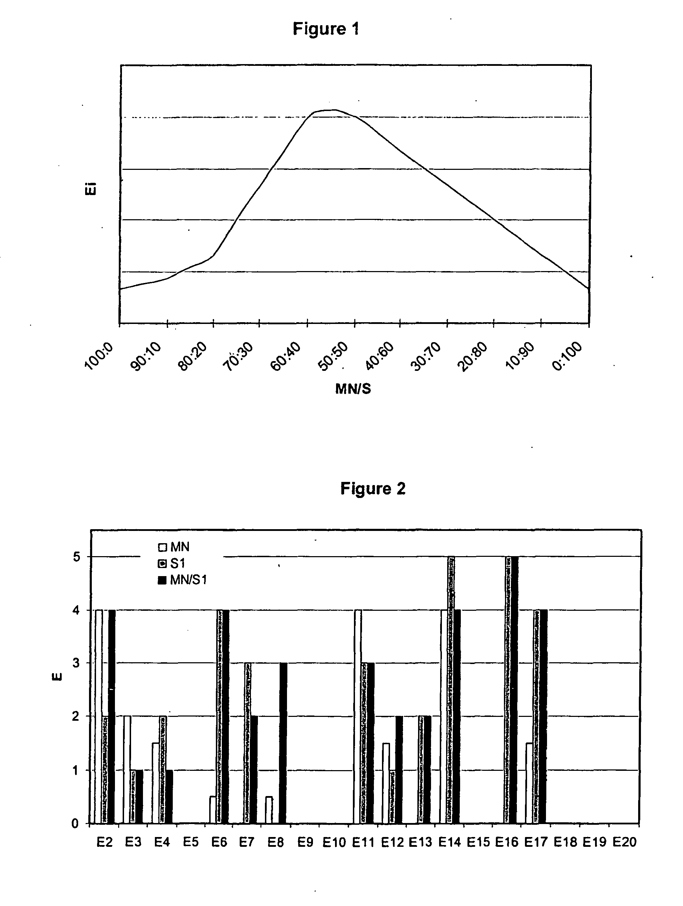

A la figure 1, est représenté un exemple de courbe E*ᵢ*=*ƒ*(MN/S).

La moyenne pondérée calculée avec les résultats recueillis sur les 19 enzymes, donne la proportion (MN/S) préconisée pour la préparation du milieu adaptateur au regard du milieu cible considéré. Des grains de kéfir préalablement adaptés dans un tel milieu, lorsqu'ils sont placés dans le milieu cible conduisent à un métabolisme optimal de l'aliment de base de la composition liquide nutritive formant le milieu cible.

### 3/- Résultats.

Le tableau ci-après donne, à titre indicatif, les proportions (MN/S) que les inventeurs préconisent d'utiliser pour les milieux adaptateurs à utiliser spécifiquement pour le traitement d'installation de préparation de soupes à base de soja, de maïs, de blé, de tournesol, de pomme de terre, ou de pomme.

En particulier, il s'agit de milieux adaptateurs réalisés avec comme milieu nutritif, au sens de l'invention, un lactosérum. Les proportions sont exprimées en terme de poids de matières sèches.

| Milieu adaptateur | proportion MN/S |
|---|---|
| Lactosérum/soja | 47:53 |
| Lactosérum/maïs | 34:66 |
| Lactosérum/blé | 26:74 |
| Lactosérum/tournesol | 47:53 |
| Lactosérum/pomme de terre | 21:79 |
| Lactosérum/pomme | 61:39 |

| | |
|---|---|
| Tableau 1 | |

### EXEMPLE 2 : Analyse des activités enzymatiques stimulées par une adaptation selon l'invention.

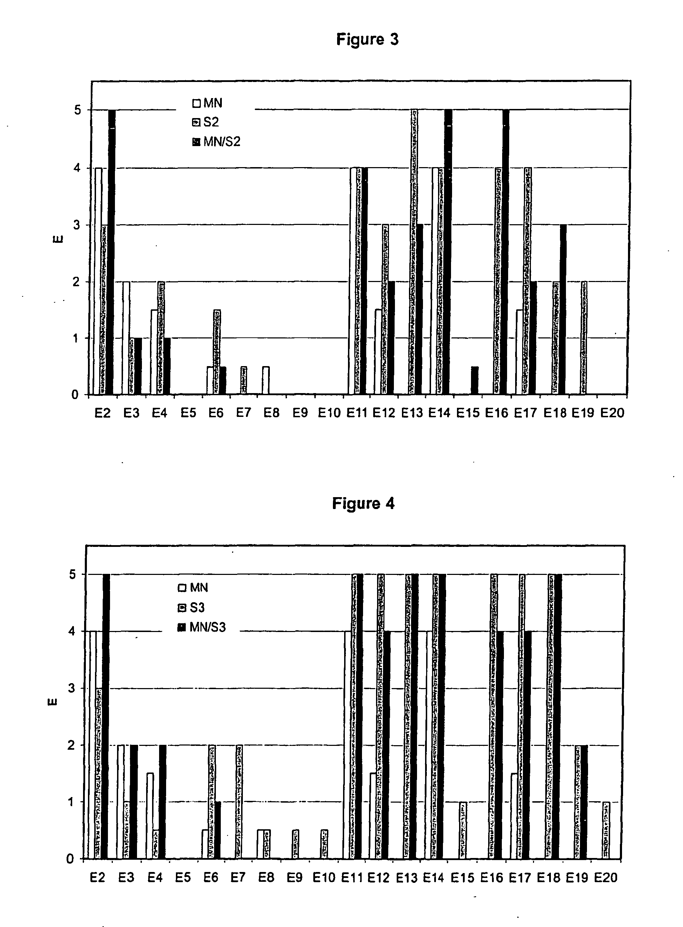

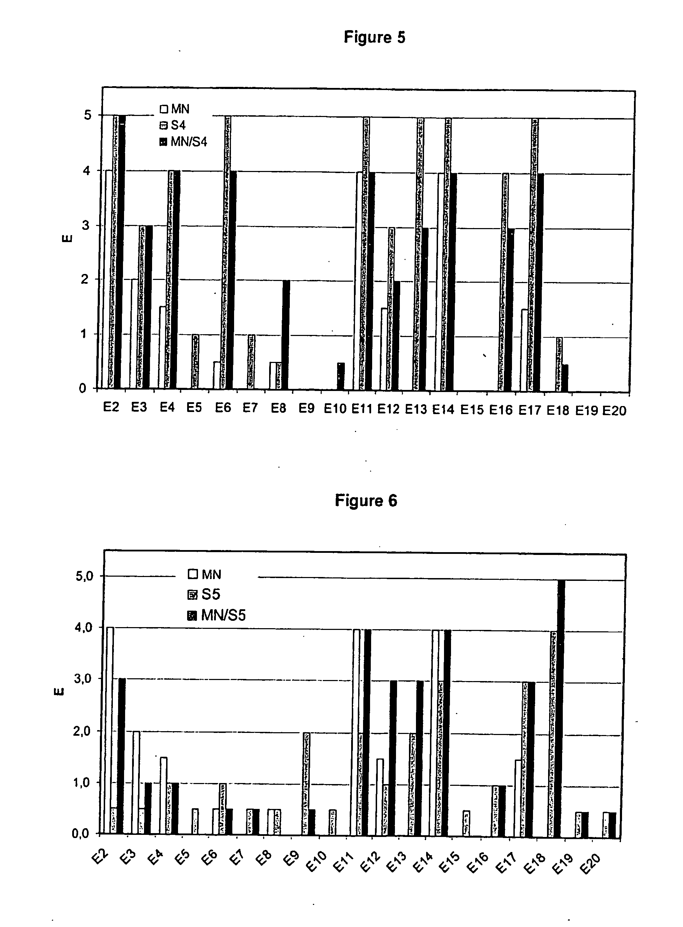

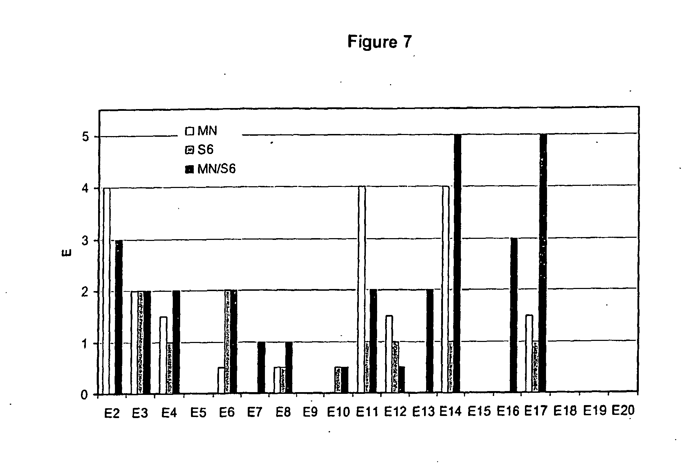

Les figures 2 à 7 exposent des histogrammes qui illustrent les activations enzymatiques particulières déclenchées par l'adaptation des grains de kéfir dans un milieu adaptateur conforme à l'invention. Seuls sont donnés les résultats obtenus avec des milieux adaptateurs ayant des proportions pondérales (MN/S) de l'ordre de 50:50. Même si ces proportions ne correspondent pas aux proportions optimales, le profil général de ces histogrammes donne un aperçu précis de la nature de la stimulation enzymatique engendrée par l'adaptation des grains de kéfir. Les figures 2 à 7 se réfèrent à des milieux adaptateurs préparés à partir d'un lactosérum (à titre de milieu nutritif) et d'un substrat particulier, respectivement, le soja, le maïs, le blé, la pomme de terre, le tournesol et la pomme (ces substrats sont respectivement référencés S1 à S6 sur les figures 2 à 7).

### EXEMPLE 3 : Conditionnement particulier des grains de kéfir.

Le présent exemple illustre un mode opératoire particulier permettant de manipuler de manière simple les grains de kéfir en vue de la mise en oeuvre de la présente invention. Bien qu'il découle de nombreux avantages, ce mode opératoire bien particulier ne limite en rien la portée de l'invention.

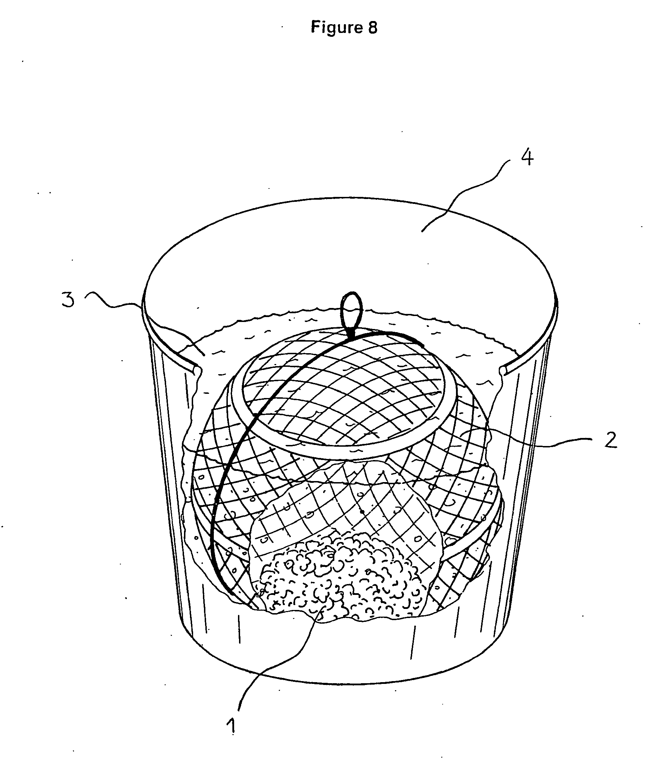

A cet effet, et tels qu'illustrés par la figure 8, les grains de kéfir 1, qui ont une forme irrégulière en "tête de chou-fleur" avec une consistance élastique et une couleur pouvant aller du blanc à crème plus ou moins jaunâtre, sont placés à l'intérieur d'un réceptacle 2. Ce réceptacle 2, de forme globalement sphérique, présente une paroi rigide de structure adaptée pour retenir les grains de kéfir tout en autorisant un échange de matières entre l'enceinte du réceptacle et le milieu extérieur. En particulier, il s'agit essentiellement d'une circulation d'une composition liquide nutritive, au sens de l'invention, ou bien d'un milieu adaptateur 3 selon l'invention. Il s'agit également d'une distribution à partir des grains de kéfir de sa flore microbienne vers le milieu extérieur à l'enceinte du réceptacle 2.

La structure de la paroi du réceptacle 2 peut consister en un treillis, comme représenté à la figure 8. Un réceptacle conforme à l'invention peut également consister en l'assemblage de deux passoires en regard l'une de l'autre, en accolant et en solidarisant leurs bords supérieurs. La paroi du réceptacle ainsi constituée présente alors une pluralité d'alésages traversants.

Le conditionnement des grains de kéfir à l'intérieur d'un réceptacle de ce type présente de nombreux avantages, notamment celui de permettre un transvasement des grains de kéfir d'un milieu de culture à un autre sans nécessiter de mettre en oeuvre d'étapes de purification.

Par ailleurs, lorsque l'invention est appliquée au traitement des soupes, une quantité de grains de kéfir appropriée est en permanence maintenue dans les machines à soupe, ce qui évite un réensemencement régulier, voire quotidien.

Tel que représenté à la figure 8, le réceptacle 2 peut être placé simplement dans un conteneur 4 notamment portatif, comme un seau, à des fins de conditionnement des grains de kéfir notamment pour faciliter leur transport. Outre le réceptacle, ce conteneur peut aussi contenir un milieu adaptateur 3. Dès lors, les grains de kéfir peuvent avantageusement être transvasés directement du milieu adaptateur approprié vers le milieu cible, chez l'exploitant.

Dans les exemples ci-après, les grains de kéfir sont manipulés au travers d'un réceptacle 2, pour les avantages sus-mentionnés.

### EXEMPLE 4 : Effet des grains de kéfir adaptés sur l'acidification du milieu et analyse de la nature de l'acidité.

Il est bien connu que l'acidification d'un milieu liquide permet de freiner la prolifération de nombreux micro-organismes, notamment des micro-organismes pathogènes comme les coliformes et les salmonelles.

On sait par ailleurs que l'efficacité de cette inhibition dépend en grande partie de la nature des acides présents dans le milieu. Egalement, il est bien établi que seuls les acides organiques sous leur forme non dissociée ont une activité antibactérienne significative, bien qu'on ait démontré qu'à de très fortes doses, les acides dissociées peuvent aussi avoir un certain effet.

Dans les tableaux 2 à 7 ci-après, sont rassemblés les résultats d'analyses de l'effet de grains de kéfir, préalablement adaptés selon l'invention, sur le pH de divers milieux cibles. Il s'agit en particulier de composition liquide de :
- farine et semoule de blé mélangées à de l'eau,
- farine et semoule de blé mélangées à un lactosérum,
- farine et semoule de maïs mélangées à de l'eau,
- farine et semoule de maïs mélangées à un lactosérum,
- tourteau de soja mélangé à un lactosérum,
- tourteau de tournesol mélangé à un lactosérum,
- farine de pomme de terre mélangée à de l'eau,
- farine de pomme de terre mélangée à un lactosérum,
- déchets d'amidon de pomme mélangés à de l'eau,
- compote de pomme mélangée à un lactosérum.

Les acides acétique et lactique, qui sont connus pour leur haut pouvoir bactériostatique, ont également été dosés. Les mesures sont exprimées en quantité d'acide total (forme non dissociée et forme dissociée), mais également en quantité d'acide sous forme non dissociée (n.d.).

Les milieux activateurs utilisés correspondent à des mélanges lactosérum/substrat (blé, maïs, soja, tournesol, pomme de terre ou pomme, selon la composition du milieu cible considéré) en proportion pondérale de l'ordre 50:50, en terme de matière sèche. La quantité de grains de kéfir utilisée correspond à 10⁶ ufc par gramme de matière sèche.

Dans les tableaux 2 à 7, chaque transfert correspond à un changement de milieu cible (changement de soupe). Ces transferts ont lieu environ tous les 7 jours. Entre deux transferts, les grains de kéfir utilisés ne subissent aucun traitement de réactivation ; ils passent directement d'une composition liquide à une autre.

Le nombre de jours, exprimés dans ces tableaux 2 à 7, correspond au nombre de jours d'action des grains de kéfir sur la composition liquide considérée, avant que soient réalisées les différentes mesures.

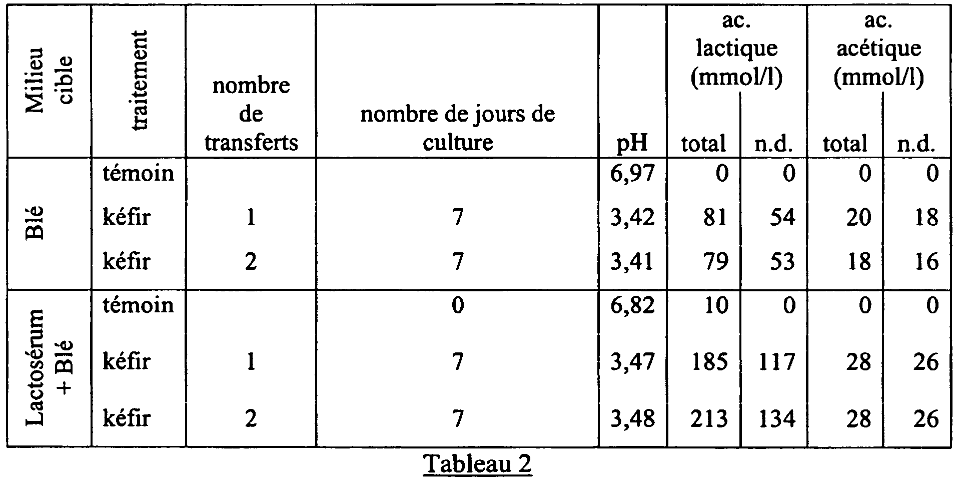

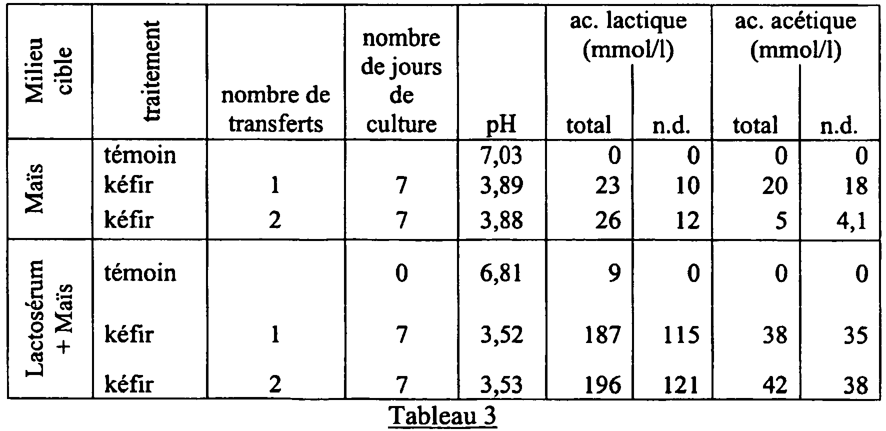

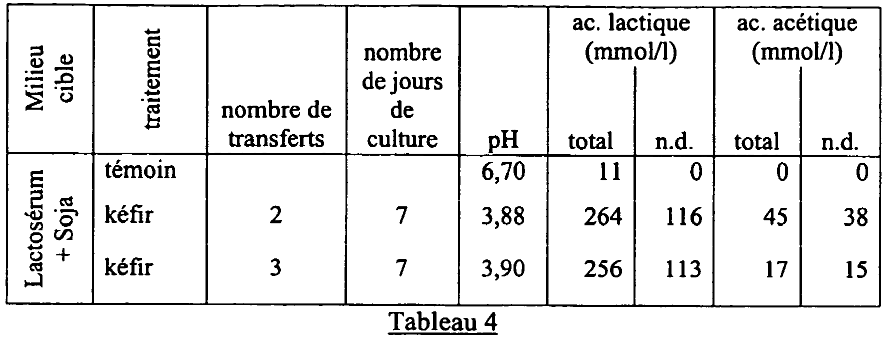

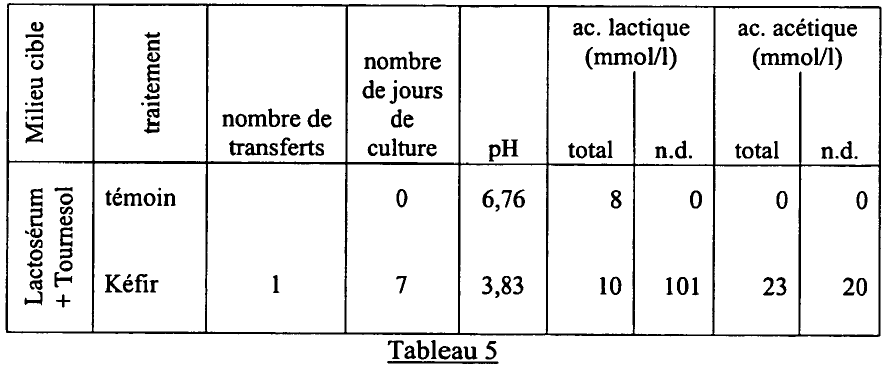

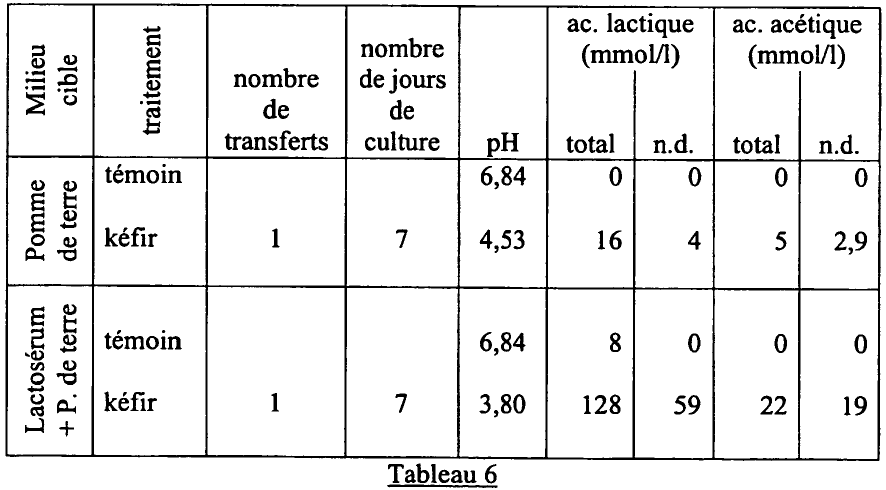

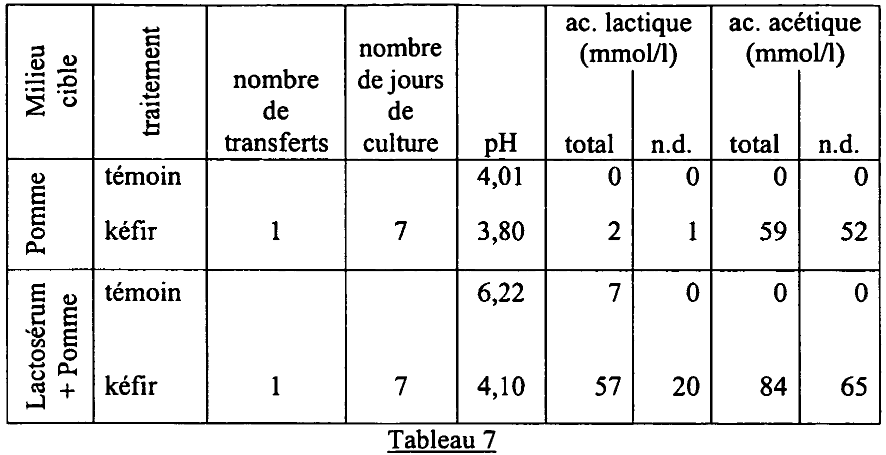

### EXEMPLE 5 : Effets des grains de kéfir sur le développement de la microflore pathogène.

Les tableaux 8 et 9 ci-après présentent l'effet constaté de l'utilisation des grains de kéfir activés sur l'évolution de la flore microbienne, exprimée en ufc/ml. Les grains de kéfir activés ont été placés dans les cuves de retour de soupe, à raison d'environ 10⁶ ufc par gramme de matière sèche estimée présente dans la composition liquide. Les grains de kéfir sont remplacés par des grains de kéfir nouvellement adaptés, environ tous les deux mois.

Les mesures ont été réalisées, d'une part, au niveau des cuves de retour de soupe de ces deux exploitations (Tableau 8) et, d'autre part, au niveau de la tuyauterie de distribution de soupe mais uniquement pour la deuxième exploitation (Tableau 9). Cette tuyauterie présentant une longueur exceptionnelle de l'ordre de 800 mètres. Dans le tableau 9, est également exprimée, en ppm, la concentration en hydrogène sulfuré (H₂S) du milieu ambiant.

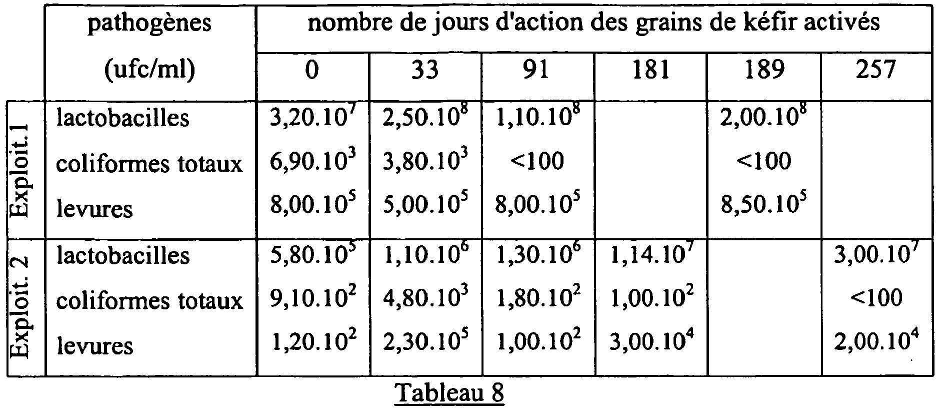

Egalement, les inventeurs ont pu constater, dans ces cuves de retour de soupe, une augmentation progressive de la flore des grains de kéfir pour dépasser 10⁷ ufc/ml alors que les coliformes chutent de 2 log en 90 jours.

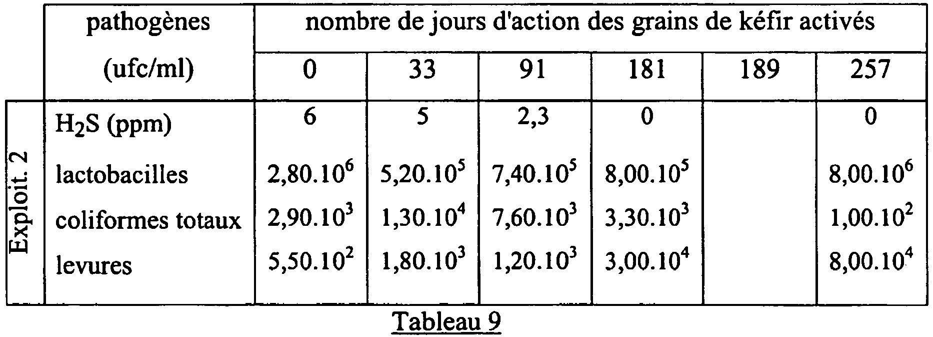

Au vu des données présentées dans le tableau 9, la disparition totale de l'hydrogène sulfuré (H₂S), du milieu ambiant, témoigne bien d'une action éradicatrice des grains de kéfir activés sur la prolifération de la flore microbienne. La présence de pathogènes dans la tuyauterie, et ce à des concentrations qui restent très constantes, peut s'expliquer par le fait que ceux-ci viennent d'un apport permanent en provenance des parties situées plus en amont de l'installation.

EXEMPLE 6 : Effets des grains de kéfir sur la croissance et le développement des animaux.

Le tableau 10 ci-après présente des résultats zootechniques comparatifs obtenus sur un élevage de porcs (exploitation 1), avant et après la mise en oeuvre d'un procédé de traitement des installations de préparation et de distribution de soupes conforme à l'invention.

**Tableau 10**

| | Avant | Après |
|---|---|---|
| Poids moyen sorti (en kg) | 115,8 | 125,0 |
| Age moyen à 105 kg (en jours) | 194 | 176 |
| Temps présences engraissement (en jours) | 183 | 180 |
| Gain moyen quotidien (en g/jour) | 589 | 658 |
| Taux de muscle (en %) | 60 | 60 |

### EXEMPLE 7 : Préparation d'additifs zootechniques par fermentation d'infusions de plantes aromatiques, et évaluation des propriétés antimicrobiennes et zootechniques de ces additifs.

### 1/- Préparation des additifs zootechniques

Les infusions sont préparées avec environ 10 g de plante(s) aromatique(s) (en particulier, *Thymus vulgaris* et/ou *Origanum vulgare*) pour 1 litre d'eau portée à une température de 80-85°C. L'infusion dure une dizaine de minutes.

Une fois les infusions refroidies et additionnées d'une quantité de sucre(s) fermentescible(s), par exemple saccharose, glucose, miel... celles-ci sont fermentées pendant 30-60 jours avec les grains de kéfir activés, en maintenant la température à 25-30°C.

La fermentation achevée, les infusions fermentées sont filtrées et les filtrats récupérés.

### 2/- Effet des additifs zootechniques sur la prolifération de la microflore pathogène

Les tableaux 11 et 12 ci-après présentent des résultats de tests comparatifs réalisés avec :
- des infusions fermentées de thym et d'origan, comme précédemment préparées,
- des infusions non fermentées, de thym et d'origan,
- des huiles essentielles chemotypée de thym et d'origan (*Thymus vulgaris* à chémotype thymol à 70 %, et *Origanum vulgare* à chémotype carvacrol à 80 %), bien connues pour leurs pouvoirs antibactériens et antifongiques,
- des extraits plus ou moins purs de thymol ou de carvacrol, du commerce.

| | THYM | | | | |
|---|---|---|---|---|---|
| | Infusions | | Huile essentielle | Actifs | |
| | Non fermentée | Fermentée | | thymol | carvacrol |
| *Staphylococcus aureus* | 2000-2500 | 3-8 | 60-90 | 30-50 | 30-50 |
| *Pseudomonds aeruginosa* | 3000-3500 | 8-12 | 150-200 | 50-70 | 50-70 |
| *Escherichia coli* | 1800-2200 | 3-8 | 50-80 | 15-25 | 15-25 |
| *Aspergillus niger* | 4000-4500 | 10-15 | 120-150 | 20-25 | 20-25 |
| *Candida albicans* | 4000-5000 | 10-15 | 150-200 | 15-30 | 15-30 |

| | | | | | |
|---|---|---|---|---|---|
| Tableau 11 | | | | | |

| | ORIGAN | | | | |
|---|---|---|---|---|---|
| | Infusions | | Huile essentielle | Actifs | |
| | Non fermentée | Fermentée | | thymol | carvacrol |
| *Staphylococcus aureus* | 2500-3000 | 5-10 | 70-90 | 30-50 | 30-50 |
| *Pseudomonds aeruginosa* | 3000-3500 | 8-12 | 180-200 | 50-70 | 50-70 |
| *Escherichia coli* | 1800-2200 | 3-8 | 50-90 | 15-25 | 15-25 |
| *Aspergillus niger* | 4000-4500 | 10-15 | 120-150 | 20-25 | 20-25 |
| *Candida albicans* | 4000-5000 | 10-15 | 150-200 | 15-30 | 15-30 |

| | | | | | |
|---|---|---|---|---|---|
| Tableau 12 | | | | | |

### 3/- Effets des additifs zootechniques selon l'invention sur la croissance et le développement des animaux.

Le tableau 13 ci-après présente des résultats zootechniques comparatifs obtenus sur un élevage de porcelets de premier âge (28 à 42 jours).

Les soupes distribuées sont supplémentées soit avec un acidifiant (mélange d'acide formique, formiate d'ammonium et d'acide propionique), classiquement utilisé dans les exploitations d'élevage traditionnelles, soit avec un additif zootechnique obtenu par fermentation d'un mélange d'une infusion de thym (30 %) et d'une infusion d'origan (70 %), au moyen de grains de kéfir activés.

**Tableau 13**

| | Aliment supplémenté en acidifiant (3 kg/tonne de soupe) | Aliment supplémenté en infusion fermentée (5 ℓ/tonne de soupe) |
|---|---|---|
| Nombre d'animaux | 96 | 96 |
| Poids au sevrage (kg) | 7.8 | 7.7 |
| Poids fin d'essai (kg) | 11,5 | 12,3 |
| Durée de l'essai | 14 jours | 14 |
| Consommation d'aliment (g/jour) | 280 | 322 |
| Gain moyen quotidien (g/jour) | 262 | 315 |
| Indice de consommation | 1,068 | 1,022 |
| Nombre de pertes | 2 | 0 |

## Revendications

1. Procédé de préparation de grains de kéfir en vue de les adapter à un milieu, dit milieu cible, liquide comprenant au moins un aliment non lacté en suspension dans un milieu aqueux ;
ce procédé comprenant une incubation des grains de kéfir dans un milieu de culture liquide, dit milieu adaptateur, pendant une durée d'au moins 48 heures et à une température adaptée au développement des grains de kéfir ;
ledit milieu adaptateur comprenant :
1) un milieu nutritif adapté au développement des grains de kéfir, et comprenant au moins tous les éléments nutritifs de base, indispensables et suffisants pour le maintien en vie des bactéries et des levures des grains de kéfir,
2) une quantité d'au moins un substrat en suspension dans ledit milieu nutritif, chaque substrat étant choisi de façon à présenter une digestibilité enzymatique au moins similaire à un des aliments non lactés dudit milieu cible,
la proportion pondérale milieu nutritif/substrat(s), en terme de matière sèche, dans ledit milieu adaptateur, étant comprise entre 1:3 à 3:1.

2. Procédé selon la revendication 1, **caractérisé en ce qu'**on choisit le(s) substrat(s) du milieu adaptateur de composition(s) chimique(s) identique(s), en terme de matière sèche, à l'(à des) aliment(s) non lacté(s) du milieu cible.

3. Procédé selon l'une des revendications 1 ou 2, **caractérisé en ce que** le milieu adaptateur comprend un substrat unique de composition chimique identique à un aliment non lacté présent en une quantité prépondérante dans le milieu cible.

4. Procédé selon l'une des revendications 1 ou 2, **caractérisé en ce que** le milieu adaptateur comprend plusieurs substrats de compositions chimiques identiques à plusieurs des aliments non lactés du milieu cible, et sont présents dans le milieu adaptateur à des proportions pondérales relatives de même ordre de grandeur que celles desdits aliments non lactés du milieu cible.

5. Procédé selon l'une des revendications 1 à 4, **caractérisé en ce que** le milieu adaptateur présente une proportion pondérale milieu nutritif/substrat(s) de l'ordre de 1:1, en terme de matière sèche.

6. Procédé selon l'une des revendications 1 à 3 et 5, **caractérisé en ce que** le milieu adaptateur est préparé en mélangeant ledit milieu nutritif et une quantité appropriée d'une composition sèche correspondant au milieu cible.

7. Procédé selon l'une des revendications 1 à 6, **caractérisé en ce que** le milieu adaptateur est préparé avec un(des) substrat(s) choisi(s) parmi : tout ou partie d'une plante céréalière, d'une plante oléagineuse, d'une plante protéagineuse, d'un légume, d'un fruit, une crème glacée, un produit de boulangerie ou de pâtisserie.

8. Procédé selon l'une des revendications 1 à 7, **caractérisé en ce que** le milieu adaptateur est préparé avec un(des) substrat(s) choisi(s) parmi : tout ou partie du soja, du maïs, du blé, du colza, de l'orge, du lupin, du petit pois, de la betterave, de la pomme de terre, de la carotte, du chou, de la pomme, de la pêche, de l'abricot, de l'ananas, de la prune, du kiwi, du melon.

9. Procédé selon l'une des revendications 1 à 8, **caractérisé en ce qu'**on prépare le milieu adaptateur avec un milieu nutritif correspondant à un milieu minimum.

10. Procédé selon la revendication 9, **caractérisé en ce que** ledit milieu minimum a une composition aqueuse comprenant au moins les éléments suivants dans les concentrations indiquées :
- glucose de l'ordre de 2 g.ℓ⁻¹
- L-cystéine de l'ordre de 2 g.ℓ⁻¹
- L-glycine de l'ordre de 25 mg.ℓ⁻¹
- L-tryptophane de l'ordre de 10 mg.ℓ⁻¹
- sulfate de magnésium de l'ordre de 15 mg.ℓ⁻¹
- sulfate de manganèse de l'ordre de 0,3 g.ℓ⁻¹
- sulfate de fer de l'ordre de 0,1 g.ℓ⁻¹
- acétate de sodium de l'ordre de 0,05 g.ℓ⁻¹
- phosphate bipotassique de l'ordre de 5 g.ℓ⁻¹
- riboflavine de l'ordre de 0,5 g.ℓ⁻¹
- thiamine de l'ordre de 1 g.ℓ⁻¹.

11. Procédé selon l'une des revendications 1 à 9, **caractérisé en ce qu'**on prépare le milieu adaptateur avec un milieu nutritif consistant en un lait demi-écrémé.

12. Procédé selon l'une des revendications 1 à 9, **caractérisé en ce qu'**on prépare le milieu adaptateur avec un milieu nutritif consistant en un lactosérum doux.

13. Procédé selon l'une des revendications 1 à 12, **caractérisé en ce que** le milieu adaptateur présente une proportion poids/volume de matière sèche de l'ordre de 10 %.

14. Procédé selon l'une des revendications 1 à 13, **caractérisé en ce qu'**on réalise l'étape d'adaptation à une température comprise entre 15°C et 40°C.

15. Procédé selon l'une des revendications 1 à 14, **caractérisé en ce qu'**on réalise ledit procédé à une température de l'ordre de 25°C.

16. Procédé selon l'une des revendications 1 à 15, **caractérisé en ce qu'**on incube lesdits grains de kéfir dans le milieu adaptateur pendant une durée de l'ordre de 3 jours.

17. Procédé selon l'une des revendications 1 à 16, **caractérisé en ce qu'**on manipule les grains de kéfir au travers d'au moins un réceptacle apte à retenir les grains de kéfir en son sein et à permettre un échange de matières entre lesdits grains de kéfir et un milieu extérieur audit réceptacle ; on réalise l'adaptation des grains de kéfir en immergeant le(s)dit(s) réceptacle(s) retenant des grains de kéfir, dans ledit milieu adaptateur.

18. Utilisation des grains de kéfir obtenus par la mise en oeuvre d'un procédé selon l'une des revendications 1 à 17 pour traiter une installation de préparation et/ou de distribution de soupes destinées à l'alimentation d'animaux d'élevage, dans laquelle on maintient lesdits grains de kéfir au contact d'une composition liquide comprenant au moins un aliment non lacté, présente à l'intérieur de ladite installation.

19. Utilisation selon la revendication 18, **caractérisée en ce qu'**on maintient au contact de ladite composition liquide une quantité de grains de kéfir correspondant à au moins de l'ordre de 10⁶ ufc par gramme de matière sèche de ladite composition liquide.

20. Utilisation selon l'une des revendications 18 ou 19, **caractérisée en ce qu'**on utilise au moins un réceptacle apte à retenir lesdits grains de kéfir en son(leur) sein et à permettre un échange de matières entre lesdits grains de kéfir et un milieu extérieur audit réceptacle ; dans le procédé, la mise des grains de kéfir en contact et au sein de ladite composition liquide est réalisée en immergeant ce(s) réceptacle(s) dans ladite composition liquide qui est maintenue sous une agitation apte à induire un flux entretenu de matières au travers du(des) réceptacle(s) immergé(s).

21. Utilisation selon la revendication 20, **caractérisée en ce qu'**on retire, de la composition liquide, le(s) réceptacle(s) contenant les grains de kéfir au terme d'une période de l'ordre de deux mois, pour le(s) remplacer par un(des) réceptacle(s) contenant des grains de kéfir fraîchement adaptés.

22. Utilisation selon la revendication 21, **caractérisée en ce qu'**on récupère le(s)dit(s) réceptacle(s) contenant les grains de kéfir retiré(s) des compositions liquides en vue de soumettre les grains de kéfir à une nouvelle étape d'adaptation.

23. Utilisation selon l'une des revendications 18 à 22, **caractérisée en ce qu'**on place au moins un réceptacle contenant les grains de kéfir dans la composition liquide d'au moins une partie de ladite installation de préparation et de distribution de soupes destinées à l'alimentation d'animaux d'élevage choisie parmi : une machine à soupe, une cuve tampon, une cuve de retour de soupe.

24. Utilisation d'une infusion de plante(s) aromatique(s) fermentée par des grains de kéfir obtenus par un procédé selon l'une des revendications 1 à 17 en tant qu'additif zootechnique aux pouvoirs antibactériens et antifongiques.

25. Utilisation selon la revendication 24, **caractérisé en ce qu'**on réalise ladite infusion avec au moins une plante aromatique renfermant des actifs choisis parmi : le thymol, le carvacrol, le géraniol, le linalol, le thujanol.

26. Utilisation selon l'une des revendications 24 ou 25, **caractérisé en ce qu'**on utilise, pour la préparation de ladite infusion, au moins une plante aromatique choisie parmi : le thym, l'origan, le clou de girofle, la cannelle, la sarriette.

## Patentansprüche

1. Verfahren zur Herstellung von Kefirknollen, um sie an flüssiges Medium, genannt Zielmedium anzupassen, umfassend mindestens ein Nicht-Milch-Nahrungsmittel in Suspension in einem wässrigen Medium,
wobei dieses Verfahren eine Inkubation von Kefirknollen in einem flüssigen Kulturmedium, genannt Adaptermedium, während einer Dauer von mindestens 48 Stunden und bei einer Temperatur umfasst, die an die Entwicklung der Kefirknollen angepasst ist,
wobei das Adaptermedium Folgendes umfasst:
1) ein Nährmedium, das an die Entwicklung der Kefirknollen angepasst ist und mindestens alle grundlegenden Nährelemente umfasst, die unentbehrlich und ausreichend sind, um Bakterien und Hefen der Kefirknollen am Leben zu erhalten,
2) eine Menge von mindestens einem Substrat in Suspension in dem Nährmedium, wobei jedes Substrat so gewählt ist, dass es eine enzymatische Verdaulichkeit aufweist, die mindestens gleich der eines der Nicht-Milch-Nahrungsmittels des Zielmediums ist,
wobei der Gewichtsanteil Nährmedium/Substrat(e) hinsichtlich der Trockenmasse in dem Adaptermedium zwischen 1:3 und 3:1 liegt.

2. Verfahren nach Anspruch 1, **dadurch gekennzeichnet, dass** das/die Substrat(e) des Adaptermediums einer/von identischen chemischen Zusammensetzung(en) hinsichtlich der Trockenmasse eines Nicht-Milch-Nahrungsmittels/von Nicht-Milch-Nahrungsmitteln des Zielmediums gewählt wird/werden.

3. Verfahren nach einem der Ansprüche 1 oder 2, **dadurch gekennzeichnet, dass** das Adaptermedium ein einzigartiges Substrat mit einer chemischen Zusammensetzung umfasst, die identisch mit einem Nicht-Milch-Nahrungsmittel ist, das in einer maßgeblichen Menge im Zielmedium enthalten ist.

4. Verfahren nach einem der Ansprüche 1 oder 2, **dadurch gekennzeichnet, dass** das Adaptermedium mehrere Substrate mit chemischen Zusammensetzungen umfasst, die identisch mit mehreren der Nicht-Milch-Nahrungsmittel des Zielmediums sind, und im Adaptermedium in relativen Gewichtsanteilen in der gleichen Größenordnung wie diejenigen der Nicht-Milch-Nahrungsmittel des Zielmediums vorhanden sind.

5. Verfahren nach einem der Ansprüche 1 bis 4, **dadurch gekennzeichnet, dass** das Adaptermedium einen Gewichtsanteil Nährmedium/Substrat(e) im Bereich von 1:1 bezüglich der Trockenmasse aufweist.

6. Verfahren nach einem der Ansprüche 1 bis 3 und 5, **dadurch gekennzeichnet, dass** das Adaptermedium durch die Mischung des Nährmediums mit einer angemessenen Menge einer entsprechenden trockenen Zusammensetzung zubereitet wird, die dem Zielmedium entspricht.

7. Verfahren nach einem der Ansprüche 1 bis 6, **dadurch gekennzeichnet, dass** das Adaptermedium mit einem Substrat/mit Substraten zubereitet wird, ausgewählt aus: der Gesamtheit oder einem Teil einer Getreidepflanze, einer Ölpflanze, einer Eiweißpflanze, eines Gemüses, eines Obsts, einer Eiscreme, einem Bäckerei- oder Konditoreiprodukt.

8. Verfahren nach einem der Ansprüche 1 bis 7, **dadurch gekennzeichnet, dass** das Adaptermedium mit einem Substrat/mit Substraten zubereitet wird, ausgewählt aus: der Gesamtheit oder einem Teil von Soja, Mais, Weizen, Raps, Gerste, Lupine, Erbsen, Rüben, Kartoffeln, Karotten, Kohl, Apfel, Pfirsich, Aprikose, Ananas, Pflaume , Kiwi, Melone.

9. Verfahren nach einem der Ansprüche 1 bis 8, **dadurch gekennzeichnet, dass** das Adaptermedium mit einem Nährmedium, das einem Minimalmedium entspricht, zubereitet wird.

10. Verfahren nach Anspruch 9, **dadurch gekennzeichnet, dass** das Minimalmedium eine wässrige Zusammensetzung aufweist, umfassend mindestens die folgenden Elemente in identischen Konzentrationen:
- Glukose im Bereich von 2 g.ℓ⁻¹
- L-Cystein im Bereich von 2 g.ℓ⁻¹
- L-Glycin im Bereich von 25 mg.ℓ⁻¹
- L-Tryptophan im Bereich von 10 mg.ℓ⁻¹
- Magnesiumsulfat im Bereich von 15 mg.ℓ⁻¹
- Mangansufat im Bereich von 0,3 g.ℓ⁻¹
- Eisensulfat im Bereich von 0,1 g.ℓ⁻¹
- Natriumacetat im Bereich von 0,05 g.ℓ⁻¹
- Bikaliumphosphat im Bereich von 5 g.ℓ⁻¹
- Riboflavin im Bereich von 0,5 g.ℓ⁻¹
- Thiamin im Bereich von 1 g.ℓ⁻¹

11. Verfahren nach einem der Ansprüche 1 bis 9, **dadurch gekennzeichnet, dass** das Adaptermedium mit einem Nährmedium zubereitet wird, das aus einer fettarmen Milch besteht.

12. Verfahren nach einem der Ansprüche 1 bis 9, **dadurch gekennzeichnet, dass** das Adaptermedium mit einem Nährmedium zubereitet wird, das aus einer Süßmolke besteht.

13. Verfahren nach einem der Ansprüche 1 bis 12, **dadurch gekennzeichnet, dass** das Adaptermedium ein Verhältnis zwischen Gewicht und Volumen der Trockenmasse im Bereich von 10 % aufweist.

14. Verfahren nach einem der Ansprüche 1 bis 13, **dadurch gekennzeichnet, dass** der Schritt des Adaptierens bei einer Temperatur zwischen 15 °C und 40 °C durchgeführt wird.

15. Verfahren nach einem der Ansprüche 1 bis 14, **dadurch gekennzeichnet, dass** das Verfahren bei einer Temperatur im Bereich von 25 °C durchgeführt wird.

16. Verfahren nach einem der Ansprüche 1 bis 15, **dadurch gekennzeichnet, dass** die Kefirknollen während einer Dauer im Bereich von 3 Tagen im Adaptermedium inkubiert werden.

17. Verfahren nach einem der Ansprüche 1 bis 16, **dadurch gekennzeichnet, dass** die Kefirknollen mit Hilfe mindestens eines Behälters gehandhabt werden, der dazu ausgelegt ist, um die Kefirknollen in seinem Inneren zu halten und einen Austausch von Stoffen zwischen den Kefirknollen und einem Medium außerhalb des Behälters zu ermöglichen; die Adaptierung der Kefirknollen erfolgt, indem der/die Behälter, der/die die Kefirknollen zurückhält/zurückhalten, in das Adaptermedium eingetaucht wird/werden.

18. Verwendung der Kefirknollen, die mit Hilfe der Durchführung eines Verfahrens nach einem der Ansprüche 1 bis 17 erhalten werden, um eine Einrichtung zur Zubereitung und/oder Verteilung von Flüssignahrung zu behandeln, die für die Ernährung von Zuchttieren ausgelegt ist, in der die Kefirknollen in Kontakt mit einer flüssigen Zusammensetzung gehalten werden, umfassend mindestens ein Nicht-Milch-Nahrungsmittel, das im Inneren der Einrichtung vorhanden ist.

19. Verwendung nach Anspruch 18, **dadurch gekennzeichnet, dass** eine Menge von Kefirknollen mit der flüssigen Zusammensetzung in Kontakt gehalten wird, die mindestens dem Bereich von 10⁶ ufc pro Gramm Trockenmasse der flüssigen Zusammensetzung entspricht.

20. Verfahren nach einem der Ansprüche 18 oder 19, **dadurch gekennzeichnet, dass** mindestens ein Behälter verwendet wird, der ausgelegt ist, um die Kefirknollen in einem/ihren Inneren zu halten, und um einen Austausch von Stoffen zwischen den Kefirknollen und einem Medium außerhalb des Behälters zu ermöglichen; im Verfahren das In-Kontakt-Bringen mit und die Anordnung der Kefirknollen innerhalb der flüssigen Zusammensetzung durch das Eintauchen dieses/dieser Behälter(s) in die flüssige Zusammensetzung erfolgt, die in einer Bewegung gehalten wird, die dazu ausgelegt ist, um einen ungedämpften Fluss von Stoffen durch den/die eingetauchte(n) Behälter zu induzieren.

21. Verwendung nach Anspruch 20, **dadurch gekennzeichnet, dass** von der flüssigen Zusammensetzung der/die Behälter, der/die die Kefirknollen enthält/enthalten, am Ende eines Zeitraums im Bereich von zwei Monaten entfernt wird/werden, um ihn/sie durch einen Behälter/durch Behälter zu ersetzen, der/die frisch adaptierte Kefirknollen enthält/enthalten.

22. Verwendung nach Anspruch 21, **dadurch gekennzeichnet, dass** der/die Behälter, enthaltend die Kefirknollen, von den flüssigen Zusammensetzungen wiedergewonnen wird/werden, um die Kefirknollen einem neuen Adaptierungsschritt zu unterziehen.

23. Verfahren nach einem der Ansprüche 18 bis 22, **dadurch gekennzeichnet, dass** mindestens ein Behälter, der Kefirknollen umfasst, in die flüssige Zusammensetzung mindestens eines Teils der Einrichtung zur Zubereitung und Verteilung von Flüssignahrung gegeben wird, die für die Ernährung von Zuchttieren ausgelegt ist, ausgewählt aus: einer Flüssignahrungsmaschine, einem Puffergefäß, einem Flüssignahrungs-Rücklaufgefäß.

24. Verwendung einer Infusion einer aromatischen Pflanze/von aromatischen Pflanzen, fermentiert durch Kefirknollen, erhalten durch ein Verfahren nach einem der Ansprüche 1 bis 17 als zootechnischer Zusatzstoff zu den antibakteriellen und antimykotischen Kräften.

25. Verwendung nach Anspruch 24, **dadurch gekennzeichnet, dass** die Infusion mit mindestens einer aromatischen Pflanze Wirkstoffe einschließt, ausgewählt aus: Thymol, Karvakrol, Geraniol, Linalool, Thujanol.

26. Verwendung nach einem der Ansprüche 24 oder 25, **dadurch gekennzeichnet, dass** für die Zubereitung der Infusion mindestens eine aromatische Pflanze verwendet wird, ausgewählt aus: Thymian, Oregano, Nelke, Zimt, Bohnenkraut.

## Claims

1. Process for the preparation of kefir grains in order to adapt them to a liquid medium, called the target medium, comprising at least one non-milk foodstuff in suspension in an aqueous medium;
which process comprises incubating the kefir grains in a liquid culture medium, called the adapter medium, for a period of at least 48 hours and at a temperature suitable for the development of the kefir grains;
said adapter medium comprising:
1) a nutrient medium suitable for the development of the kefir grains and comprising at least all the basic nutrient elements essential and sufficient for keeping alive the bacteria and the yeasts of the kefir grains,
2) a quantity of at least one substrate in suspension in said nutrient medium, each substrate being chosen so as to have an enzymatic digestibility at least similar to one of the non-milk foodstuffs of said target medium,
the proportion by weight nutrient medium/substrate(s), in terms of dry matter, in said adapter medium being from 1:3 to 3:1.

2. Process according to claim 1, **characterised in that** the substrate(s) of the adapter medium is(are) chosen from chemical composition(s) identical, in terms of dry matter, to the non-milk foodstuff(s) of the target medium.

3. Process according to either claim 1 or claim 2, **characterised in that** the adapter medium comprises a single substrate which has a chemical composition identical to a non-milk foodstuff present in a preponderant amount in the target medium.

4. Process according to either claim 1 or claim 2, **characterised in that** the adapter medium comprises a plurality of substrates which have chemical compositions identical to a plurality of the non-milk foodstuffs of the target medium, and which are present in the adapter medium in relative proportions by weight of the same order of magnitude as those of said non-milk foodstuffs of the target medium.

5. Process according to any one of claims 1 to 4, **characterised in that** the adapter medium has a proportion by weight nutrient medium/substrate(s) of approximately 1:1, in terms of dry matter.

6. Process according to any one of claims 1 to 3 and 5, **characterised in that** the adapter medium is prepared by mixing said nutrient medium and an appropriate quantity of a dry composition corresponding to the target medium.

7. Process according to any one of claims 1 to 6, **characterised in that** the adapter medium is prepared with (a) substrate(s) chosen from: all or part of a cereal plant, of an oleaginous plant, of a proteaginous plant, of a vegetable, of a fruit, an ice cream, a bakery or pastry product.

8. Process according to any one of claims 1 to 7, **characterised in that** the adapter medium is prepared with (a) substrate(s) chosen from: all or part of soya, maize, wheat, colza, barley, lupin, pea, beet, potato, carrot, cabbage, apple, peach, apricot, pineapple, plum, kiwi, melon.

9. Process according to any one of claims 1 to 8, **characterised in that** the adapter medium is prepared with a nutrient medium corresponding to a minimum medium.

10. Process according to claim 9, **characterised in that** said minimum medium has an aqueous composition comprising at least the following elements in the indicated concentrations:
- glucose approximately 2 g.l⁻¹
- L-cysteine approximately 2 g.l⁻¹
- L-glycine approximately 25 mg.l⁻¹
- L-tryptophan approximately 10 mg.l⁻¹
- magnesium sulfate approximately 15 mg.l⁻¹
- manganese sulfate approximately 0.3 g.l⁻¹
- iron sulfate approximately 0.1 g.l⁻¹
- sodium acetate approximately 0.05 g.l⁻¹
- dipotassium phosphate approximately 5 g.l⁻¹
- riboflavin approximately 0.5 g.l⁻¹
- thiamine approximately 1 g.l⁻¹.

11. Process according to any one of claims 1 to 9, **characterised in that** the adapter medium is prepared with a nutrient medium consisting of semi-skimmed milk.

12. Process according to any one of claims 1 to 9, **characterised in that** the adapter medium is prepared with a nutrient medium consisting of sweet whey.

13. Process according to any one of claims 1 to 12, **characterised in that** the weight/volume proportion of dry matter in the adapter medium is approximately 10%.

14. Process according to any one of claims 1 to 13, **characterised in that** the adaptation step is carried out at a temperature of from 15°C to 40°C.

15. Process according to any one of claims 1 to 14, **characterised in that** said process is carried out at a temperature of approximately 25°C.

16. Process according to any one of claims 1 to 15, **characterised in that** said kefir grains are incubated in the adapter medium for a period of approximately 3 days.

17. Process according to any one of claims 1 to 16, **characterised in that** the kefir grains are manipulated through at least one receptacle capable of holding the kefir grains inside it and of permitting an exchange of matter between said kefir grains and a medium outside said receptacle; the adaptation of the kefir grains is carried out by immersing said receptacle(s) holding the kefir grains in said adapter medium.

18. Use of the kefir grains obtained by carrying out the process according to any one of claims 1 to 17 for treating an installation for the preparation and/or distribution of soups for the feeding of livestock, in which said kefir grains are kept in contact with a liquid composition comprising at least one non-milk foodstuff, which liquid composition is present inside said installation.

19. Use according to claim 18, **characterised in that** there is kept in contact with said liquid composition a quantity of kefir grains corresponding to at least approximately 10⁶ cfu per gram of dry matter of said liquid composition.

20. Use according to either claim 18 or claim 19, **characterised in that** there is used at least one receptacle capable of holding said kefir grains inside it(them) and of permitting an exchange of matter between said kefir grains and a medium outside said receptacle; in the process, the placing of the kefir grains into contact with and within said liquid composition is carried out by immersing the receptacle(s) in said liquid composition, which is agitated in such a manner as to induce a maintained flow of matter through the immersed receptacle(s).

21. Use according to claim 20, **characterised in that** the receptacle(s) containing the kefir grains is(are) withdrawn from the liquid composition at the end of a period of approximately two months in order to be replaced by (a) receptacle(s) containing freshly adapted kefir grains.

22. Use according to claim 21, **characterised in that** said receptacle(s) containing the kefir grains that has(have) been withdrawn from the liquid compositions is(are) recovered in order to subject the kefir grains to a new adaptation step.

23. Use according to any one of claims 18 to 22, **characterised in that** at least one receptacle containing the kefir grains is placed in the liquid composition of at least part of said installation for the preparation and distribution of soups for the feeding of livestock selected from: a soup machine, a buffer tank, a soup return tank.

24. Use of an infusion of aromatic plant(s) fermented by kefir grains obtained by a process according to any one of claims 1 to 17 as a zootechnical additive having antibacterial and antifungal action.

25. Use according to claim 24, **characterised in that** said infusion is produced with at least one aromatic plant containing active principles selected from: thymol, carvacrol, geraniol, linalool, thujanol.

26. Use according to either claim 24 or claim 25, **characterised in that** there is used, for the preparation of said infusion, at least one aromatic plant chosen from: thyme, marjoram, clove, cinnamon, savory.
